# DEMANDE DE BREVET EUROPEEN

(11) **EP 2 543 547 A1**
(43) Date de publication de la demande: **09.01.2013**
(21) Numéro de dépôt: 12174836.2
(22) Date de dépôt: 03.07.2012
(51) Int. Cl.: B60R 7/00, B60P 7/08

(54) **Dispositif de protection de compartiment à bagages de véhicule automobile**

(30) Priorité: 08.07.2011 FR 1156211
(71) Demandeur: CENTRE D'ETUDE ET DE RECHERCHE POUR L'AUTOMOBILE (CERA), 51100 Reims (FR)
(72) Inventeur: Philippe, Benoît, 17246 Santa Cristina d'Aro (ES); Middel, Richard, 17300 Blanes (ES); Fretigny, Adeline, 51100 Reims (FR)
(74) Mandataire: Sayettat, Julien Christian

(57) **Abrégé**

L'invention concerne un dispositif (1) de protection de compartiment à bagages de véhicule automobile, ledit dispositif comprenant : deux éléments (2) latéraux de caisse ; un filet (3) vertical de protection présentant une bordure supérieure (4) souple ; des moyens de montage en tension dudit filet au véhicule, lesdits moyens comprenant deux sangles (5) respectives d'accrochage en tension de ladite bordure auxdits éléments, chaque sangle étant associée de part et d'autre : en zone d'extrémité respective de ladite bordure, et à un plot (6) de montage emboitable dans un logement (7) prévu sur l'élément correspondant, ledit logement comprenant une ouverture (8) arrière d'introduction dudit plot, ledit logement étant agencé de manière à guider l'insertion dudit plot dans ledit logement selon un déplacement dudit plot vers l'avant couplé à une rotation dudit plot selon un axe (9) transversal, ladite sangle étant montée solidairement en rotation audit plot de manière à présenter une torsion décroissante à mesure que l'on insère ledit plot dans ledit logement.

## Description

L'invention concerne un dispositif de protection de compartiment à bagages de véhicule automobile et un filet d'un tel dispositif.

Il est connu de réaliser un dispositif de protection de compartiment à bagages de véhicule automobile, ledit dispositif comprenant :
- deux éléments latéraux de caisse,
- un filet vertical de protection présentant une bordure supérieure souple,
- des moyens de montage en tension dudit filet au véhicule, lesdits moyens comprenant deux sangles respectives d'accrochage en tension de ladite bordure auxdits éléments,
chaque sangle étant associée de part et d'autre :
- en zone d'extrémité respective de ladite bordure,
- et à un plot de montage emboitable dans un logement prévu sur l'élément correspondant.

Un tel dispositif, disposé entre le compartiment à bagages et l'habitacle des passagers, permet de retenir les bagages dans le compartiment à bagages en cas de collision du véhicule.

Cependant, il peut se faire que le filet ait été monté par l'utilisateur de manière modérément tendue.

Il en résulte notamment les risques suivants :
- que le plot soit insuffisamment inséré dans son logement,
- que le plot puisse être extrait de son logement de manière involontaire.

Par conséquent, le dispositif n'est plus en mesure d'assurer de façon optimale sa fonction de protection.

L'invention a pour but de pallier cet inconvénient.

A cet effet, et selon un premier aspect, l'invention propose un dispositif de protection de compartiment à bagages de véhicule automobile, ledit dispositif comprenant :
- deux éléments latéraux de caisse,
- un filet vertical de protection présentant une bordure supérieure souple,
- des moyens de montage en tension dudit filet au véhicule, lesdits moyens comprenant deux sangles respectives d'accrochage en tension de ladite bordure auxdits éléments,
chaque sangle étant associée de part et d'autre :
- en zone d'extrémité respective de ladite bordure,
- et à un plot de montage emboitable dans un logement prévu sur l'élément correspondant, ledit logement comprenant une ouverture arrière d'introduction dudit plot, ledit logement étant agencé de manière à guider l'insertion dudit plot dans ledit logement selon un déplacement dudit plot vers l'avant couplé à une rotation dudit plot selon un axe transversal,
ladite sangle étant montée solidairement en rotation audit plot de manière à présenter une torsion décroissante à mesure que l'on insère ledit plot dans ledit logement.

Dans cette description, les termes de positionnement dans l'espace (bas, supérieur, transversal, latéral, avant, arrière, vertical, horizontal, ...) sont pris en référence au dispositif disposé dans le véhicule.

Avec l'agencement proposé - du fait de la cinématique particulière de mise en place du plot dans le logement et du montage de la sangle relativement au plot - une insertion insuffisante du plot dans le logement ou un retrait du plot du logement est contrecarré par une action de la sangle qui exerce - du fait de sa mise en tension, même modérée - un couple de torsion qui s'oppose à la rotation à réaliser pour extraire le plot de son logement.

En effet, sous l'effet de la traction dont elle est l'objet, la sangle tend à adopter sa configuration de moindre torsion, qui correspond ici à l'insertion complète du plot dans son logement.

On précise que l'axe transversal est bien entendu pris en référence au plot et se déplace avec lui.

Selon un deuxième aspect, l'invention propose un filet d'un tel dispositif.

D'autres particularités et avantages de l'invention apparaîtront dans la description qui suit, faite en référence aux figures jointes, dans lesquelles :

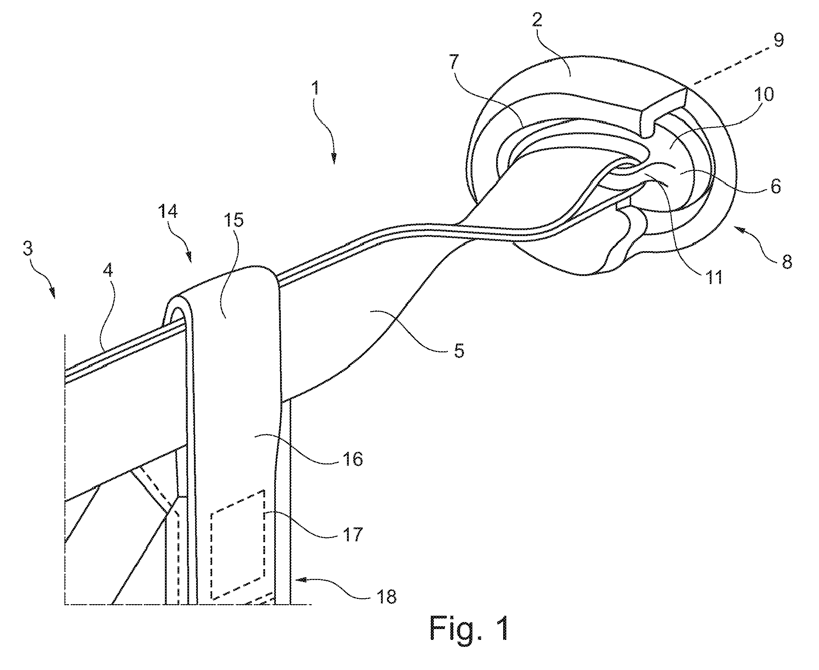

- la figure 1 est une vue en perspective partielle d'un dispositif selon une réalisation, une sangle étant accrochée à un élément de caisse,
- la figure 2 est une vue en perspective d'un plot et d'une partie d'élément de caisse, ledit plot étant extrait du logement dudit élément,
- la figure 3 est une vue en perspective partielle d'un filet présentant un agencement particulier de sangle.

En référence aux figures, on décrit un dispositif 1 de protection de compartiment à bagages de véhicule automobile, ledit dispositif comprenant :
- deux éléments 2 latéraux de caisse,
- un 3 filet vertical de protection présentant une bordure supérieure 4 souple,
- des moyens de montage en tension dudit filet au véhicule, lesdits moyens comprenant deux sangles 5 respectives d'accrochage en tension de ladite bordure auxdits éléments,
chaque sangle 5 étant associée de part et d'autre :
- en zone d'extrémité respective de ladite bordure,
- et à un plot 6 de montage - notamment en métal - emboitable dans un logement 7 prévu sur l'élément 2 correspondant, ledit logement comprenant une ouverture 8 arrière d'introduction dudit plot, ledit logement étant agencé de manière à guider l'insertion dudit plot dans
   ledit logement selon un déplacement dudit plot vers l'avant couplé à une rotation dudit plot selon un axe 9 transversal,
ladite sangle étant montée solidairement en rotation audit plot de manière à présenter une torsion décroissante à mesure que l'on insère ledit plot dans ledit logement.

Le fait que la bordure supérieure 4 soit souple est lié en particulier à l'absence de tige de rigidification de ladite bordure, un tel agencement permettant de disposer d'un filet 3 de moindre poids et dont le pliage est facilité lorsqu'il n'est pas utilisé.

Selon la réalisation représentée, le plot 6 présente :
- une partie d'emboitement 10 en forme générale de galet allongé et recourbé,
- et une partie de fixation 11 de la sangle 5 correspondante en forme de boucle,
le logement 7 présentant une forme générale complémentaire de celle de ladite partie d'emboitement, de concavité tournée vers le bas - c'est à dire qu'elle présente une courbure concave vue d'en bas -, ledit logement comprenant une fente 12 latérale de passage de ladite partie de fixation hors dudit logement.

En particulier, les géométries respectives de la partie d'emboitement 10 et du logement 7 nécessitent une torsion de la sangle 5 pour permettre l'insertion du plot 6 dans ledit logement, ladite torsion décroissant ensuite à mesure de ladite insertion.

Selon la réalisation représentée, la fixation d'une sangle 5 à la partie de fixation 11 correspondante est faite par insertion de ladite partie dans un ourlet 13 d'extrémité de ladite sangle, un tel agencement permettant un couplage en rotation de ladite sangle avec le plot 6.

Selon la réalisation représentée, au moins une sangle 5 est réglable en longueur.

Ceci permet de garantir que les sangles 5 sont en position sensiblement horizontale quelle que soit la distance entre les logements 7, que les écarts de distance soient dus à des dispersions dimensionnelles ou au fait que le filet 3 se monte en différents endroits du véhicule où la largeur du véhicule n'est pas la même, par exemple au niveau de dossiers de sièges de deuxième rangée et de troisième rangée.

Un positionnement horizontal des sangles 5 permet de minimiser l'espace entre la bordure supérieure 4 et le toit du véhicule, ce qui assure une protection optimisée des passagers.

Selon une réalisation non représentée, les sangles 5 sont issues de matière d'une bande courant le long de la bordure supérieure 4.

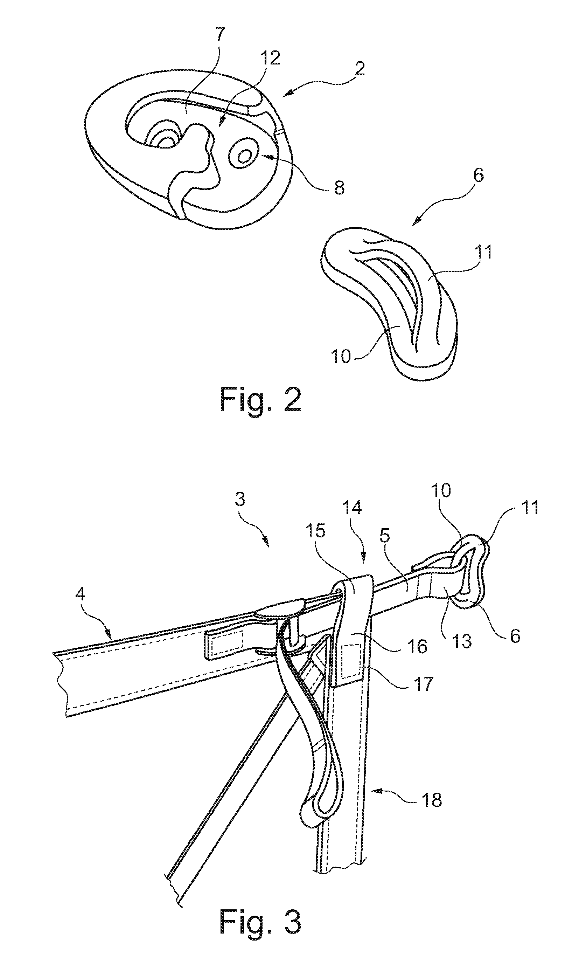

Selon la réalisation représentée en figure 3, les sangles 5 sont associées à distance des extrémités 14 de la bordure supérieure 4, chacune desdites extrémités étant pourvue d'une boucle annexe 15 dans laquelle passe la sangle 5 correspondante de manière à maintenir la planéité de l'ensemble du filet 3 lorsqu'il est monté en tension, et garantir ainsi une rigidité suffisante dudit filet en zone latérale en cas de projection de bagages.

Une telle réalisation est dictée ici par le fait que le montage des plots 6 dans les logements 7 est facilité lorsque la sangle 5 bénéficie d'un supplément de longueur.

Selon la réalisation représentée, la boucle annexe 15 est issue d'une sangle annexe 16 associée - ici par couture 17 - en périphérie du filet 3.

Selon la réalisation représentée, la sangle annexe 16 est associée en bordure latérale 18 du filet 3.

On décrit à présent un filet 3 d'un dispositif 1, ledit filet comprenant :
- une bordure supérieure 4 souple,
- des moyens de montage en tension au véhicule, lesdits moyens comprenant deux sangles 5 respectives destinées à accrocher en tension ladite bordure à des éléments 2 latéraux de caisse,
chaque sangle étant associée de part et d'autre :
- en zone d'extrémité respective de ladite bordure,
- et à un plot 6 de montage destiné à être emboité par un déplacement vers l'avant couplé à une rotation selon un axe transversal dans un logement 7 prévu sur l'élément 2 correspondant,
ladite sangle étant montée solidairement en rotation audit plot de manière à pouvoir présenter une torsion décroissante à mesure que l'on insère ledit plot dans ledit logement.

## Revendications

1. Dispositif (1) de protection de compartiment à bagages de véhicule automobile, ledit dispositif comprenant :
• deux éléments (2) latéraux de caisse,
• un filet (3) vertical de protection présentant une bordure supérieure (4) souple,
• des moyens de montage en tension dudit filet au véhicule, lesdits moyens comprenant deux sangles (5) respectives d'accrochage en tension de ladite bordure auxdits éléments,
chaque sangle étant associée de part et d'autre :
• en zone d'extrémité respective de ladite bordure,
• et à un plot (6) de montage emboitable dans un logement (7) prévu sur l'élément correspondant, ledit logement comprenant une ouverture (8) arrière d'introduction dudit plot, ledit logement étant agencé de manière à guider l'insertion dudit plot dans ledit logement selon un déplacement dudit plot vers l'avant couplé à une rotation dudit plot selon un axe (9) transversal,
ladite sangle étant montée solidairement en rotation audit plot de manière à présenter une torsion décroissante à mesure que l'on insère ledit plot dans ledit logement.

2. Dispositif selon la revendication 1, **caractérisé en ce que** le plot (6) présente :
• une partie d'emboitement (10) en forme générale de galet allongé et recourbé,
• et une partie de fixation (11) de la sangle (5) correspondante en forme de boucle,
le logement (7) présentant une forme générale complémentaire de celle de ladite partie d'emboitement, de concavité tournée vers le bas, ledit logement comprenant une fente (12) latérale de passage de ladite partie de fixation hors dudit logement.

3. Dispositif selon la revendication 2, **caractérisé en ce que** la fixation d'une sangle (5) à la partie de fixation (11) correspondante est faite par insertion de ladite partie dans un ourlet (13) d'extrémité de ladite sangle.

4. Dispositif selon l'une quelconque des revendications 1 à 3, **caractérisé en ce qu'**au moins une sangle (5) est réglable en longueur.

5. Dispositif selon l'une quelconque des revendications 1 à 4, **caractérisé en ce que** les sangles (5) sont issues de matière d'une bande courant le long de la bordure supérieure (4).

6. Dispositif selon l'une quelconque des revendications 1 à 5, **caractérisé en ce que** les sangles (5) sont associées à distance des extrémités de la bordure supérieure (4), chacune desdites extrémités étant pourvue d'une boucle annexe (15) dans laquelle passe la sangle (5) correspondante de manière à maintenir la planéité de l'ensemble du filet (3) lorsqu'il est monté en tension.

7. Dispositif selon la revendication 6, **caractérisé en ce que** la boucle annexe (15) est issue d'une sangle annexe (16) associée en périphérie du filet (3).

8. Dispositif selon la revendication 7, **caractérisé en ce que** la sangle annexe (16) est associée en bordure latérale (18) du filet (3).

9. Filet d'un dispositif selon l'une quelconque des revendications 1 à 8, ledit filet comprenant :
• une bordure supérieure (4) souple,
• des moyens de montage en tension au véhicule, lesdits moyens comprenant deux sangles (5) respectives destinées à accrocher en tension ladite bordure à des éléments (2) latéraux de caisse,
chaque sangle étant associée de part et d'autre :
• en zone d'extrémité respective de ladite bordure,
• et à un plot (6) de montage destiné à être emboité par un déplacement vers l'avant couplé à une rotation selon un axe transversal dans un logement (7) prévu sur l'élément (2) correspondant,
ladite sangle étant montée solidairement en rotation audit plot de manière à pouvoir présenter une torsion décroissante à mesure que l'on insère ledit plot dans ledit logement.
